# FASCICULE DE BREVET EUROPEEN

(11) **EP 1 388 485 B1**
(45) Date de publication et mention de la délivrance du brevet: **17.09.2008**
(21) Numéro de dépôt: 03291977.1
(22) Date de dépôt: 07.08.2003
(51) Int. Cl.: B62D 21/15, B62D 21/09, B60G 7/02

(54) **Structure de véhicule automobile à stabilité améliorée en cas de choc sur la voie basse**
Kraftfahrzeug mit verbesserter Struktur gegen einem Aufprall auf dem Unterboden
Automotive vehicle with improved structure against low-level impacts

(30) Priorité: 09.08.2002 FR 0210170; 26.09.2002 FR 0211915
(43) Date de publication de la demande: 11.02.2004
(73) Titulaire: Peugeot Citroën Automobiles SA, 92200 Neuilly sur Seine (FR)
(72) Inventeur: Lefevre, Eric, 95600 Eaubonne (FR)

(56) Documents cités:
- EP-A- 0 888 953
- EP-A- 1 106 478
- EP-A- 1 184 261
- EP-A- 1 241 078
- EP-A- 1 256 510
- DE-A- 19 703 951
- US-A- 4 059 286

## Description

L'invention concerne en général les techniques de l'automobile.

Plus précisément, l'invention concerne une structure de véhicule automobile, comprenant un brancard, un berceau, une première traverse transversale et, sur chacun des côtés droit et gauche du véhicule, un triangle de suspension de roue, le brancard comprenant des longerons disposés sur les côtés droit et gauche du véhicule, symétriquement par rapport à un plan longitudinal médian de ce véhicule, les longerons comprenant, chacun sur le côté correspondant du véhicule, une poutre médiane droite ou gauche s'étendant dans une zone longitudinalement médiane du véhicule, une poutre antérieure droite ou gauche s'étendant vers l'avant du véhicule et surélevée par rapport à la poutre médiane , et une poutre inclinée droite ou gauche reliant la poutre médiane à la poutre antérieur du même côté du véhicule, la première traverse reliant les extrémités antérieures des poutres antérieures, le berceau comprenant une structure transversale reliant entre elles les poutres médianes droite et gauche, et des prolonges encastrées par des parties d'extrémités postérieures dans la structure transversale des côtés droit et gauche du véhicule et s'étendant vers l'avant respectivement sous les poutres antérieures droite et gauche, les triangles de suspension étant chacun fixé à la structure transversale par un point de fixation antérieur et par un point de fixation postérieur, une deuxième traverse reliant des extrémités antérieures des prolonges droite et gauche opposées aux parties d'extrémités postérieures.

Des dispositifs de ce type sont connus de l'art antérieur, et notamment du document de brevet FR0106264. Celui-ci révèle une structure dont le berceau est formé de deux coquilles et présente, devant chaque triangle de suspension et le point de fixation antérieur de ce triangle, un prolongement par lequel ces coquilles sont fixées l'une à l'autre, par exemple par soudage. Ces prolongements forment des corps creux dans lesquels viennent s'encastrer les parties d'extrémité postérieures des prolonges. En cas de choc frontal, l'effort transmis par les prolonges va déformer les prolongements du berceau, qui viennent alors s'appuyer par un épaulement sur les triangles de suspensions, répartissant cet effort sur le reste de la structure et évitant une déformation plus poussée du berceau.

La structure de FR 01 06 264 constitue un progrès sur les structures antérieures car elle permet d'obtenir une meilleure résistance au choc frontal.

Néanmoins, l'évolution constante des normes de résistance aux chocs des véhicules oblige à améliorer encore la tenue de la structure en cas de choc sur la voie basse, c'est-à-dire de choc sur la deuxième traverse, qui relie les prolonges.

EP-A-1 256 510 décrit une structure de véhicule comprenant les caractéristiques techniques du préambule de la revendication 1.

Cependant, cette structure connue a pour inconvénient que la fixation de chaque prolonge au triangle de suspension via un longeron de berceau n'est pas tenue en cas de choc.

La présente invention a pour but de palier les inconvénients ci-dessus exposés de l'art antérieur.

A cette fin, l'invention propose une structure de véhicule automobile comportant les caractéristiques techniques de la partie caractérisante de la revendication 1.

Dans un mode de réalisation possible de l'invention, la structure transversale comprend une traverse centrale et, sur chacun des côtés droit et gauche de la traverse centrale, un longeron de berceau creux, formé chacun de coquilles supérieure et inférieure.

Avantageusement, chaque longeron de berceau peut comprendre une partie antérieure dans laquelle est encastrée la partie d'extrémité postérieure de la prolonge correspondante.

De préférence, les prolonges peuvent être encastrées dans les longerons de berceau sur au moins un quart de leur longueur longitudinale.

Par exemple, les parties extrémités postérieures des prolonges gauche et droite peuvent présenter chacune un logement s'étendant dans un plan transversal, un coude du triangle de suspension correspondant au point de fixation antérieur étant engagé dans ce logement.

Avantageusement, les triangles de suspension gauche et droit peuvent comprendre chacun une première branche longitudinale s'étendant du coude jusqu'à une extrémité longitudinale libre et située à l'intérieur du longeron de berceau correspondant, et une seconde branche transversale prolongeant la première à partir du coude vers l'extérieur du véhicule, le point de fixation postérieur solidarisant la première branche longitudinale avec le longeron de berceau.

De préférence, la traverse centrale peut être constituée de coquilles centrales supérieure et inférieure formant un corps au moins partiellement creux, les longerons de berceau droit et gauche étant enserrés au moins partiellement entre les coquilles centrales supérieure et inférieure.

De préférence, les prolonges peuvent être des tubes creux monoblocs réalisés par hydroformage.

Par exemple, les prolonges droite et gauche comprennent chacune des moyens d'absorption d'énergie par déformation contrôlée de la prolonge en cas de choc.

Avantageusement, les prolonges droite et gauche comprennent chacune des moyens pour guider la déformation de la prolonge en cas de choc.

De préférence, les prolonges droite et gauche s'étendent dans une direction générale proche de la direction longitudinale, la déformation desdites prolonges étant guidée en faisant varier la raideur des sections transversales de ces prolonges en fonction de leur position longitudinale.

Par exemple, la raideur des sections transversales des prolonges droite et gauche est relativement plus faible aux parties d'extrémité antérieures des prolonges, relativement plus forte aux parties d'extrémité postérieures des prolonges, et augmente progressivement d'avant en arrière en fonction de la position longitudinale de la section.

Avantageusement, les prolonges droite et gauche présentent des sections transversales sensiblement rectangulaire à angles arrondis, les rayons de courbure des angles arrondis étant relativement plus faibles aux extrémités antérieures de la prolonge, relativement plus élevés aux parties d'extrémité postérieures des prolonges, et augmentant progressivement d'avant en arrière en fonction de la position longitudinale de la section.

De préférence, les moyens d'absorption d'énergie de chacune des prolonges droite et gauche comprennent au moins une vague formée autour de la prolonge, dans une section transversale de celle-ci.

Par exemple, les moyens d'absorption d'énergie de chacune des prolonges droite et gauche comprennent au moins deux vagues formées autour de la prolonge, dans des sections transversales de celle-ci.

Avantageusement, les prolonges droite et gauche s'étendent dans une direction générale proche de la direction longitudinale et présentent chacune des sections transversales sensiblement rectangulaires, les vagues comprenant des tronçons supérieur, inférieur et latéraux, les tronçons latéraux étant décalés longitudinalement par rapport aux tronçons supérieur et inférieur.

De préférence, les moyens d'absorption d'énergie de chacune des prolonges droites et gauche comprennent une pluralité de vagues formées autour de la prolonge, juxtaposées, formant une boîte absborbeur de chocs.

Par exemple, les prolonges droite et gauche s'étendent dans une direction générale proche de la direction longitudinale et présentent chacune deux faces latérales mutuellement opposées, les moyens d'absorption d'énergie de chacune desdites prolonges comprenant au moins une rainure perpendiculaire à ladite direction générale sur chacune des faces latérales.

Avantageusement, les prolonges droite et gauche s'étendent dans une direction générale proche de la direction longitudinale et présentent chacune des sections transversales sensiblement rectangulaires, les moyens d'absorption d'énergie de chacune desdites prolonges comprenant des rainures obliques ménagées à des angles d'au moins une section transversale de la prolonge.

De préférence, les moyens d'absorption d'énergie des prolonges droite et gauche sont disposés sur des parties antérieures desdites prolonges.

D'autres caractéristiques et avantages de l'invention ressortiront clairement de la description qui en est faite ci-dessous, à titre indicatif et nullement limitatif, en référence aux figures annexées, parmi lesquelles :
- la figure 1 est une vue en perspective d'une structure conforme à l'art antérieur,
- la figure 2 est une vue en perspective du berceau, des triangles de suspension et de la deuxième traverse d'une structure selon l'invention,
- la figure 3 est une vue de côté suivant la flèche III de la figure 2,
- la figure 4 est une vue de dessus suivant la flèche IV de la figure 2,
- la figure 5 est une vue éclatée d'un longeron de berceau, d'un triangle, d'une prolonge et d'une partie de la deuxième traverse de la structure de la figure 2,
- la figure 6 est une vue en coupe d'éléments de la figure 4, observés suivant l'incidence définie par les flèches VI-VI de la figure 4, et
- la figure 7 est une vue en coupe d'éléments de la figure 4, observés suivant l'incidence définie par les flèches VII-VII de la figure 4,
- la figure 8 est une vue en perspective d'une prolonge, observée suivant l'incidence définie par la flèche VIII de la figure 2, et comprenant des moyens d'absorption d'énergie conforme à une première variante de réalisation et des moyens de guidage de la déformation,
- la figure 9 est une vue similaire à la figure 8, montrant une deuxième variante de réalisation des moyens d'absorption d'énergie,
- la figure 10 est une vue similaire à la figure 8, montrant une troisième variante de réalisation des moyens d'absorption d'énergie,

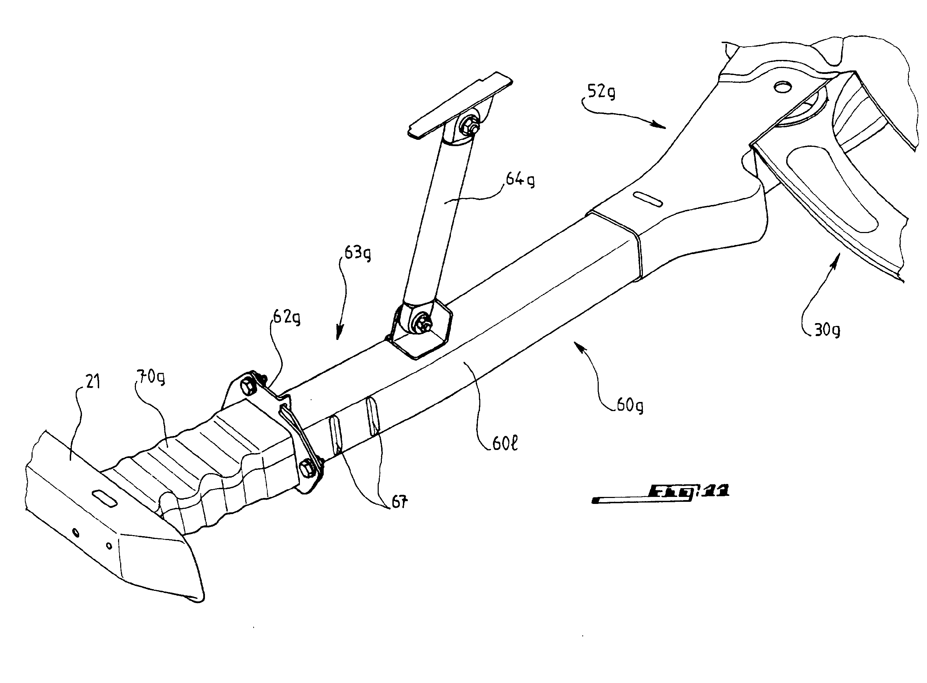

- la figure 11 est une vue similaire à la figure 8, montrant une quatrième variante de réalisation des moyens d'absorption d'énergie et sans moyens de guidage de la déformation, et
- la figure 12 est une vue similaire à la figure 8, montrant une cinquième variante de réalisation des moyens d'absorption d'énergie et sans moyens de guidage de la déformation.

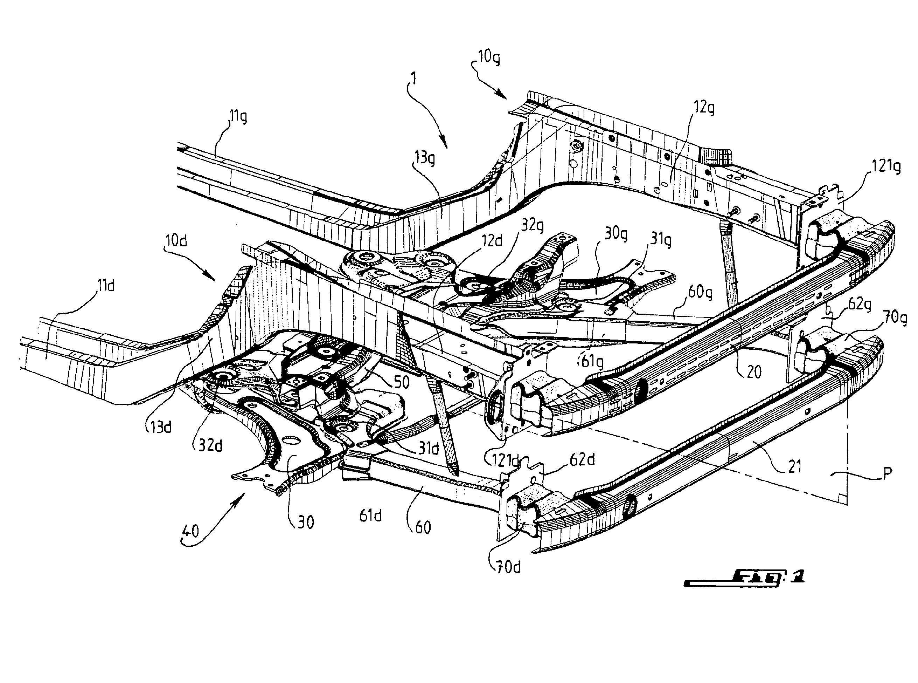

La structure de véhicule automobile de la figure 1 est conforme au document de brevet FR0106264. Elle comprend un brancard 1, un berceau 40, une première traverse transversale 20 et, sur chacun des côtés droit et gauche du véhicule, un triangle de suspension de roue 30d et 30g.

Le brancard 1 comprend des longerons 10d et 10g disposés sur les côtés droit et gauche du véhicule, symétriquement par rapport à un plan longitudinal médian P de ce véhicule.

Ces longerons 10d et 10g comprennent eux-mêmes, chacun sur le côté correspondant du véhicule, une poutre médiane droite 11d ou gauche 11g s'étendant dans une zone longitudinalement médiane du véhicule, une poutre antérieure droite 12d ou gauche 12g s'étendant vers l'avant du véhicule et surélevée par rapport à la poutre médiane, et une poutre inclinée droite 13d ou gauche 13g reliant la poutre médiane à la poutre antérieure du même côté du véhicule.

La première traverse 20 relie les extrémités antérieures respectives 121d et 121g des poutres antérieures droite 12d et gauche 12g.

L'ensemble formé par la première traverse et les longerons droit et gauche constitue la voie haute d'absorption des chocs.

Le berceau 40 comprend une structure transversale 50 reliant entre elles les poutres médianes droite 11d et gauche 11g, et des prolonges 60d et 60g encastrées par des parties d'extrémités postérieures respectives 61d et 61g dans la structure transversale 50 des côtés droit et gauche du véhicule.

Ces prolonges 60d et 60g s'étendent vers l'avant à partir de la structure transversale 50, respectivement sous les poutres antérieures droite 12d et gauche 12g.

Les triangles de suspension 30d et 30g sont chacun fixé à la structure transversale 50 par un point de fixation antérieur, respectivement 31d et 31g, et par un point de fixation postérieur, respectivement 32d et 32g.

Ces deux points de fixation sont sensiblement alignés dans le sens longitudinal, le point de fixation antérieur étant situé relativement plus à l'avant que le point de fixation postérieur correspondant au même côté.

Une deuxième traverse 21 relie des extrémités antérieures 62d et 62g des prolonges droite 60d et gauche 60g, les extrémités antérieures 62d et 62g étant opposées aux parties d'extrémités postérieures 61d et 61g.

Des absorbeurs de chocs 70d et 70g sont interposés entre la deuxième traverse 21 et respectivement les extrémités antérieures 62d et 62g des prolonges.

La deuxième traverse 21 et le berceau 40 muni de ses prolonges et de sa structure transversale constituent la voie basse d'absorption des chocs.

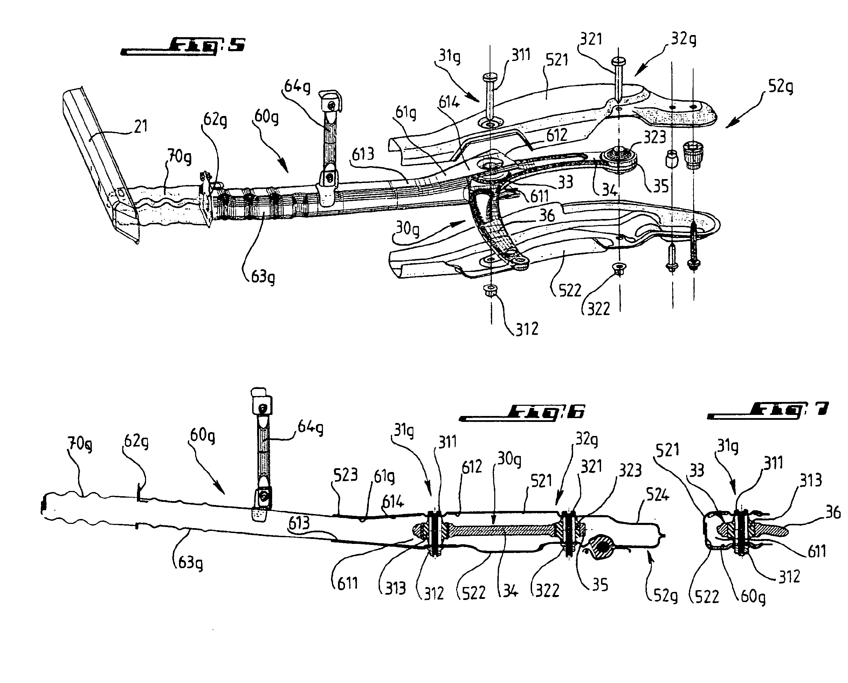

Selon l'invention, de chaque côté du véhicule, le point fixe antérieur 31d ou 31g solidarise la partie d'extrémité postérieure 61d ou 61g de la prolonge 60d ou 60g correspondante, à la structure transversale 50 et au triangle de suspension 30d ou 30g. Cet agencement est nettement visible sur la figure 5.

En cas de choc sur la voie basse du véhicule, l'effort est ainsi directement transmis de la deuxième traverse aux prolonges puis aux triangles de suspension, sans attendre la déformation de la traverse centrale ou des longerons de berceau.

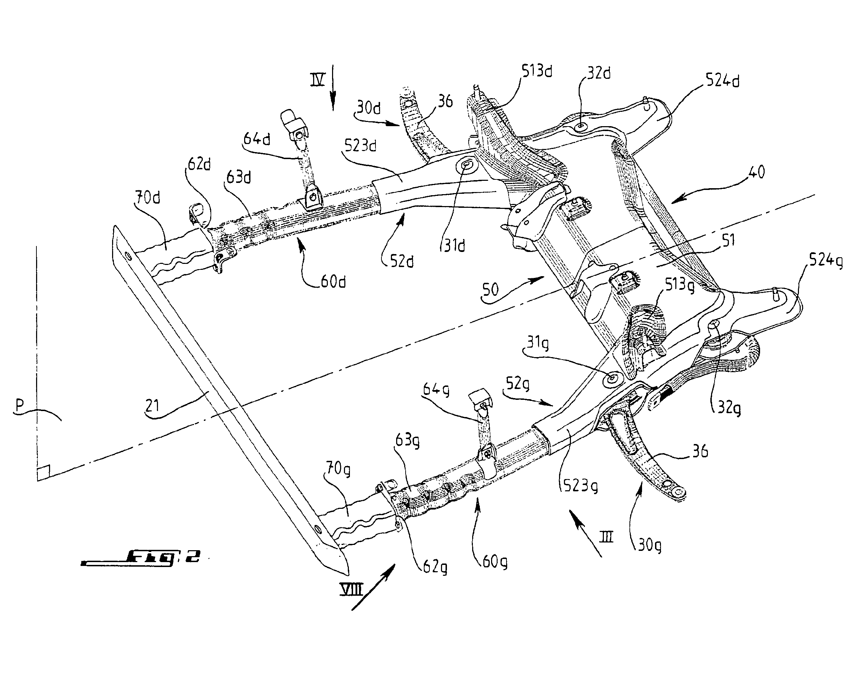

Comme la montre la figure 2, la structure transversale 50 est subdivisée en trois ensembles et comprend une traverse centrale 51 et, sur chacun des côtés droit et gauche de la traverse centrale 51, des longerons de berceau 52d et 52g creux, formés chacun de coquilles supérieure, respectivement 521d et 521g, et inférieure, respectivement 522d et 522g.

La traverse centrale 51 s'étend transversalement entre les poutres médianes droite 11d et gauche 11g.

Ces longerons de berceau 52d et 52g présentent des formes allongées dans le sens longitudinal et comprennent chacun une partie antérieure, respectivement 523d et 523g, dans laquelle est encastrée la partie d'extrémité postérieure 61d ou 61g de la prolonge correspondante.

Les parties antérieures 523d et 523g font saillie vers l'avant relativement à la traverse centrale 51, des côtés droit et gauche de celle-ci.

Les prolonges droite 60d et gauche 60g sont encastrées dans les longerons de berceau 52d et 52g correspondant sur au moins un quart de leur longueur longitudinale, en général sur environ 40% de leur longueur longitudinale.

Les prolonges 60d et 60g sont des tubes creux monoblocs, comme on le voit sur la figure 6, réalisés de préférence par hydroformage.

Ces prolonges 60d et 60g comprennent chacune une partie centrale droite, séparant une partie d'extrémité antérieure, respectivement 63d ou 63g, à laquelle est fixée l'absorbeur de choc 70d ou 70g correspondant, de la partie d'extrémité postérieure 61d ou 61g.

Les parties d'extrémité antérieures 63d et 63g sont sensiblement droites et longitudinales. Les parties centrales s'étendent vers l'arrière à partir des parties d'extrémité antérieures 63d et 63g, dans une direction légèrement inclinées vers l'intérieur du véhicule relativement à la direction longitudinale.

Les parties d'extrémités postérieures 61d et 61g des prolonges comprennent chacune un tronçon antérieur 613, constituant le prolongement de la partie centrale de la prolonge et de même section dans un plan transversal que celle-ci, et un tronçon en éventail 614 s'élargissant progressivement, latéralement, à partir du tronçon antérieur 613 jusqu'à l'extrémité libre postérieure 612. L'élargissement se fait vers l'intérieur du véhicule.

Vues de dessus, les parties d'extrémités postérieures 61d et 61g des prolonges présentent donc une base transversale élargie correspondant à l'extrémité libres 612 et deux bords longitudinaux s'étendant vers l'avant du véhicule, convergeant vers le tronçon antérieur 613.

Les parties antérieures 523d et 523g des longerons de berceau 52d et 52g sont de forme complémentaires des parties d'extrémités postérieures 61d et 61g des prolonges. Elles comprennent donc chacune une section tubulaire avant dans laquelle les tronçons antérieurs 613 sont engagés, qui se prolongent par une section allant en s'élargissant latéralement à partir de la section tubulaire avant, dans lesquelles les tronçons en éventail 614 sont engagés.

Les parties d'extrémités postérieures 61d et 61g des prolonges gauche et droite 60d et 60g présentent chacune un logement 611, s'étendant dans un plan sensiblement horizontal. Ce logement 611 est ouvert sur un bord longitudinal de la partie d'extrémité tourné vers l'extérieur du véhicule et également du côté de l'extrémité libre postérieure 612.

Un coude 33 du triangle de suspension 30d ou 30g correspondant au point fixe antérieur 31d ou 31g est engagé dans ce logement 611.

Comme le montrent les figures 6 et 7, ces points de fixation antérieurs 31d et 31g sont constitués chacun par une vis 311 traversant les coquilles supérieure 521 et inférieure 522, les prolonges 60d ou 60g et les triangles de suspension 30d ou 30g, la vis coopérant avec un écrou 312.

Un manchon de liaison élastiques 313 est interposé entre la vis 311 et le triangle 30d ou 30g pour laisser à ce dernier une certaine liberté de mouvement par rapport au berceau 40.

Les triangles de suspension gauche 30g et droit 30d comprennent chacun une première branche longitudinale 34 s'étendant du coude 33 jusqu'à une extrémité longitudinale libre 35, et disposée à l'intérieur longeron de berceau correspondant, et une seconde branche transversale 36 prolongeant la première à partir du coude 33 vers l'extérieur du véhicule.

Une ouverture est ménagée sur un côté longitudinal extérieur de chaque longeron de berceau pour permettre le passage de la seconde branche transversale du triangle de suspension correspondant.

Le point de fixation postérieur 32d et 32g solidarise la première branche longitudinale 34 avec le longeron de berceau correspondant.

Ces points de fixation postérieurs 32d et 32g sont chacun constitués par une vis 321 traversant les coquilles supérieure 521 et inférieure 522, et les triangles de suspension 30d ou 30g, la vis coopérant avec un écrou 322.

Un manchon de liaison élastique 323 est interposé entre la vis 321 et le triangle 30d ou 30g.

La traverse centrale 51 est elle aussi constituée de coquilles centrales supérieure et inférieure (non représentées) formant un corps au moins partiellement creux.

Les longerons de berceau droit 52d et gauche 52g sont enserrés au moins partiellement entre ces coquilles centrales supérieure et inférieure.

Les différents éléments constituant le berceau 40 sont assemblés par soudage : les coquilles centrales supérieure et inférieure sont soudées l'une sur l'autre, les coquilles supérieure et inférieure constituant chaque longeron de berceau sont soudées l'une sur l'autre, les prolonges sont soudées aux longerons de berceau et les longerons de berceau sont soudés à la traverse centrale.

Le berceau 40 est fixé sur le brancard 1 par deux tirants 64d et 64g reliant respectivement les prolonges droite 60d et gauche 60g aux poutres antérieures 12d et 12g situées du même côté du véhicule, par deux cornes droite 513d et gauche 513g faisant saillie au-dessus de la traverse centrale 51 et reliant celle-ci respectivement aux poutres inclinées droite 13d et gauche 13g, et enfin par des parties postérieures 524d et 524g des longerons de berceau droits 52d et gauche 52g faisant saillie vers l'arrière relativement à la traverse centrale 51 et reliées respectivement aux poutres médianes droite 11d et gauche 11g.

Les prolonges droite et gauche 60d et 60g peuvent comprendre chacune des moyens d'absorption d'énergie par déformation contrôlée de la prolonge en cas de chocs à grandes vitesses.

Les absorbeurs de chocs 70d et 70g sont adaptés aux chocs dits piétons, et sont conçus pour se déformer de telle sorte qu'un tel choc d'énergie inférieure à une première limite n'entraîne pas de déformation plastique du berceau 40. Cette première limite correspond approximativement à un choc à une vitesse de 16 km/h.

Les moyens d'absorption de chocs à grandes vitesses sont adaptés à des chocs d'énergie supérieure à celle que les absorbeurs 70d et 70g peuvent absorber, montant jusqu'à une seconde limite supérieure à la première et correspondant par exemple à un choc frontal à une vitesse de 67 km/h.

Ces moyens d'absorptions sont conçus de façon à se déformer de telle sorte que, jusqu'à la seconde limite d'énergie, la traverse centrale et les autres éléments de structure ne soient pas déformés plastiquement.

Les moyens d'absorption d'énergie des prolonges droite et gauche 60d et 60g sont disposés sur des parties d'extrémités antérieures 63d et 63g desdites prolonges, et sont constitués par des zones des prolonges présentant des amorces d'écrasement.

Ces zones présentent une résistance mécanique plus faible que le reste des prolonges, et vont se déformer préférentiellement en cas de choc à grande vitesse en absorbant une partie de l'énergie transmise au véhicule.

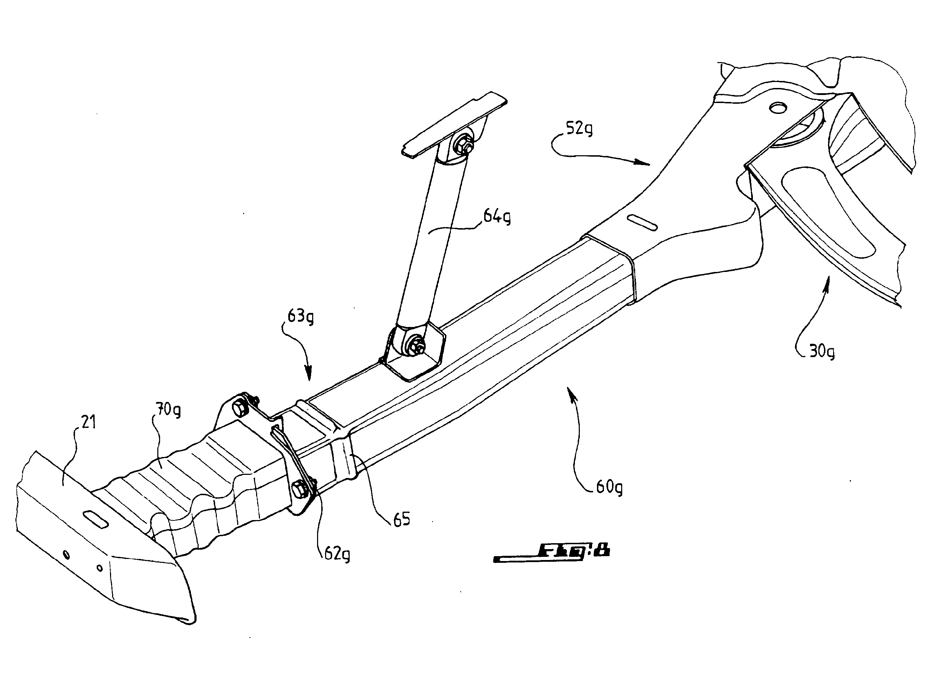

Dans une première variante de réalisation, représentée sur la figure 8, l'amorce d'écrasement est constituée par une vague 65 formée autour de la prolonge, dans une section transversale de celle-ci.

Cette vague 65 est constituée par une partie de la paroi de la prolonge faisant saillie vers l'extérieur de la prolonge. La paroi présente dans cette partie la même épaisseur que dans les parties adjacentes à la vague 65, ou une épaisseur inférieure. La vague 65 est réalisée lors de la fabrication de la prolonge par hydroformage.

En cas de choc, la zone de la prolonge entourant la vague 65 s'écrase dans un sens longitudinal en absorbant une partie de l'énergie.

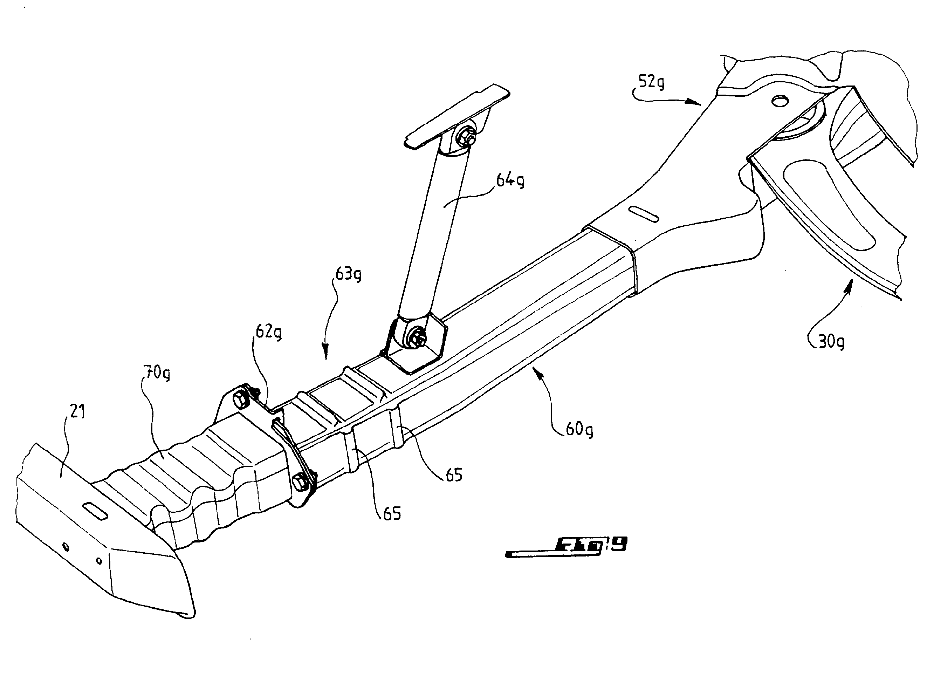

Dans une deuxième variante de réalisation, représenté sur la figure 9, les moyens d'absorption d'énergie de chacune des prolonges droite et gauche 60d et 60g comprennent deux vagues 65 identiques formées autour de la prolonge, dans des sections transversales de celle-ci. Ces vagues 65 sont situées à proximité l'une de l'autre.

Cette deuxième variante de réalisation permet d'élargir la zone de la prolonge qui s'écrase en cas de choc et permet donc d'amortir une énergie plus grande que la première variante. Elle est adaptée à des véhicules plus lourds.

Comme le montrent les figures 5 à 10, les prolonges droite et gauche 60d et 60g s'étendent dans une direction générale proche de la direction longitudinale et présentent de préférence chacune des sections transversales sensiblement rectangulaires. Les vagues 65 comprennent dans ce cas des tronçons droits supérieur, inférieur et latéraux suivant les quatre côtés de la section rectangulaire. Les tronçons latéraux de la vague 65 sont décalés longitudinalement par rapport aux tronçons supérieur et inférieur, indifféremment vers l'avant ou vers l'arrière. Cette disposition permet d'éviter que la partie d'extrémité antérieure de la prolonge ne pivote autour de la zone des amorces d'écrasement comme si cette zone constituait une rotule. La partie d'extrémité antérieure se déplace et s'écrase suivant la direction longitudinale et ne pivote pas latéralement.

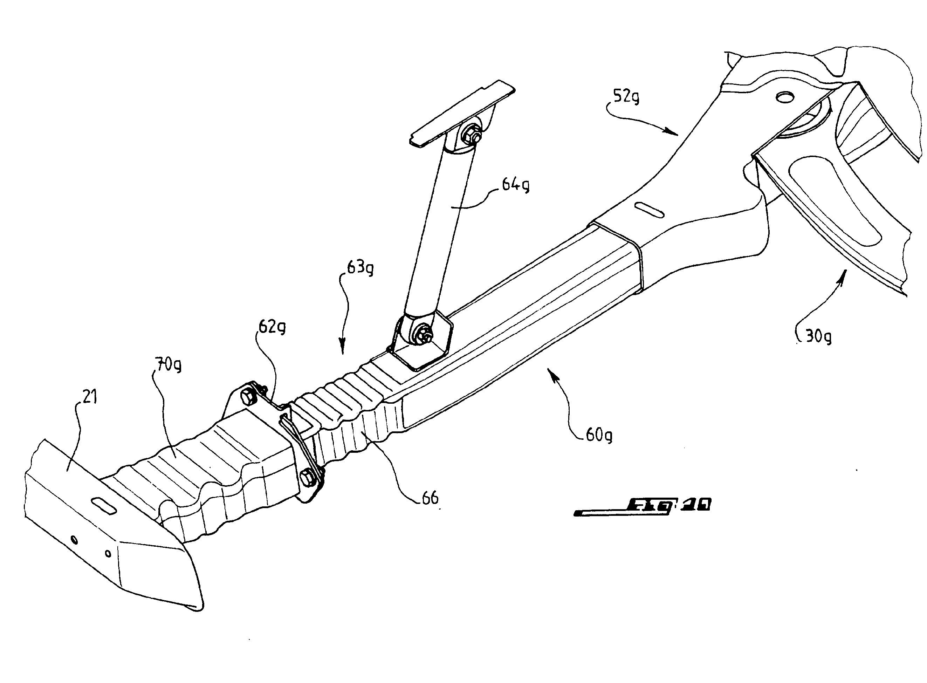

Dans une troisième variante de réalisation, représentée sur la figure 10, les moyens d'absorption d'énergie de chacune des prolonges droites et gauche 60d et 60g comprennent une pluralité de vagues formées autour de la prolonge, juxtaposées, formant une boîte absborbeur de chocs 66. Cette boîte 66 s'apparente par sa conception et son fonctionnement aux absorbeurs de chocs 70d et 70g. Elle permet d'absorber une quantité d'énergie encore supérieure à celle des moyens d'absorption des première et deuxième variantes de réalisation.

Dans le cas où les prolonges droite et gauche 60d et 60g présentent chacune deux faces latérales 601 mutuellement opposées, par exemple quand les prolonges sont de section latérale rectangulaire, les amorces d'écrasement des moyens d'absorption d'énergie de chacune desdites prolonges peuvent comprendre au moins une rainure 67 sur chacune des faces latérales 601, et de préférence deux rainures 67. Ces rainures 67 sont perpendiculaires à la direction générale dans laquelle s'étend la prolonge. De préférence, elles sont verticales.

Chaque rainure verticale 67 est constituée par une partie de la paroi de la prolonge faisant saillie vers l'intérieur de la prolonge. Elle s'étend sur toute la hauteur de la paroi latérale. La paroi présente dans cette partie la même épaisseur que dans les parties adjacentes à la rainure 67, ou une épaisseur inférieure. Les rainures 67 sont réalisées lors de la fabrication de la prolonge par hydroformage.

En cas de choc, la zone de la prolonge entourant les rainures 67 s'écase en se plissant dans un sens longitudinal.

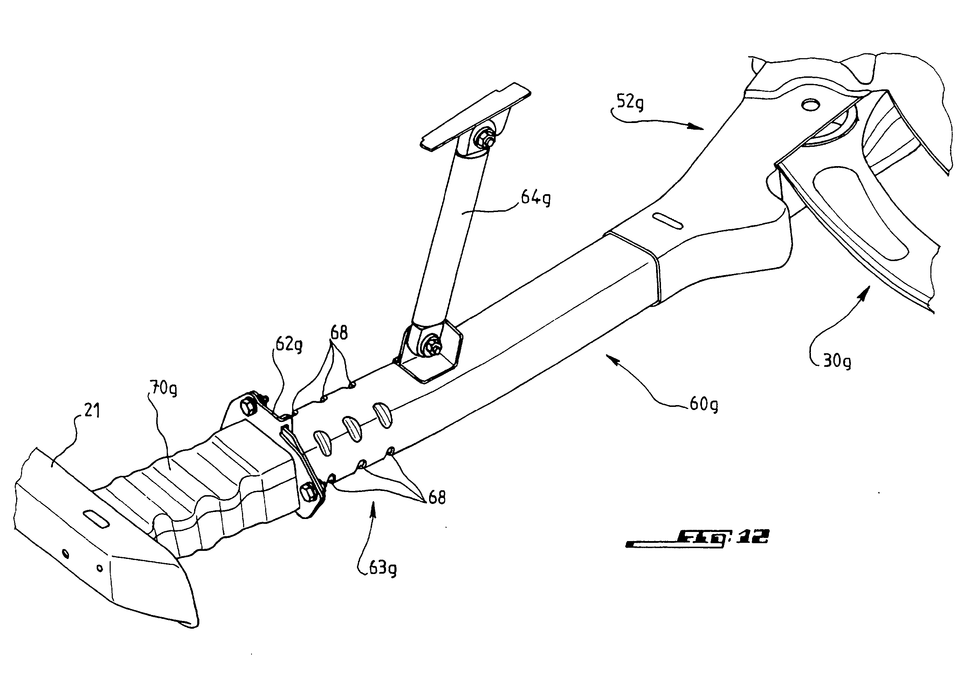

Dans un cinquième mode de réalisation, représenté sur la figure 12, est adapté au cas où les prolonges droite et gauche 60d et 60g présentent chacune des sections transversales sensiblement rectangulaires. Les amorces d'écrasement des moyens d'absorption d'énergie de chacune desdites prolonges comprennent alors des rainures obliques 68 ménagées à des angles d'au moins une section transversale de la prolonge, de préférence de trois sections transversales situées à proximité les unes des autres.

Ces rainures sont similaires aux rainures 67, mais sont de courtes longueurs relativement à la taille des sections transversales.

En cas de choc, les zones des prolonges entourant les rainures 67 s'écrasent en se plissant dans un sens longitudinal.

En plus des moyens pour absorber l'énergie en cas de choc, les prolonges droite et gauche 60d et 60g comprennent chacune des moyens pour guider et contrôler la déformation de la prolonge en cas de choc. On cherche à éviter que la déformation des prolonges conduise celles-ci à heurter et endommager d'autres éléments de structure ou équipements du véhicule.

Les amorces d'écrasement décrits ci-dessus permettent un premier guidage, puisqu'elles permettent de délimiter des zones d'écrasement préférentiel et/ou d'orienter la direction d'écrasement.

Les différentes liaisons des prolonges avec les tirants 64d et 64g, la structure transversale 50 et les absorbeurs de chocs 70 contribuent également à orienter les efforts d'écrasement.

Lesdits moyens de guidage réalisent un guidage supplémentaire, obtenu en faisant varier la raideur des sections transversales des prolonges en fonction de leur position longitudinale.

La raideur des sections transversales des prolonges droite et gauche 60d et 60g est relativement plus faible aux extrémités antérieures 62d et 62g des prolonges, relativement plus forte aux parties d'extrémité postérieures 61d, et 61g des prolonges, et augmente progressivement d'avant en arrière en fonction de la position longitudinale de la section.

Les parties antérieures des prolonges se déformeront ainsi de préférence aux parties postérieures.

Au cas où les prolonges droite et gauche 60d et 60g présentent des sections transversales sensiblement rectangulaire à angles arrondis, comme sur les figures 8 à 10, les rayons de courbure des angles arrondis sont relativement plus faibles aux extrémités antérieures 62d et 62g de la prolonge, relativement plus élevés aux parties d'extrémité postérieures 61d et 61g des prolonges, et augmentent progressivement d'avant en arrière en fonction de la position longitudinale de la section.

On fait ainsi varier la raideur longitudinalement le long des prolonges.

Le choix des moyens d'absorption et des moyens de guidage de la déformation des prolonges est effectué par l'homme du métier essentiellement en fonction du poids du véhicule et de la forme des prolonges. La longueur, la section et le mode de fixation de ces prolonges sur les éléments du berceau sont des paramètres à prendre en compte.

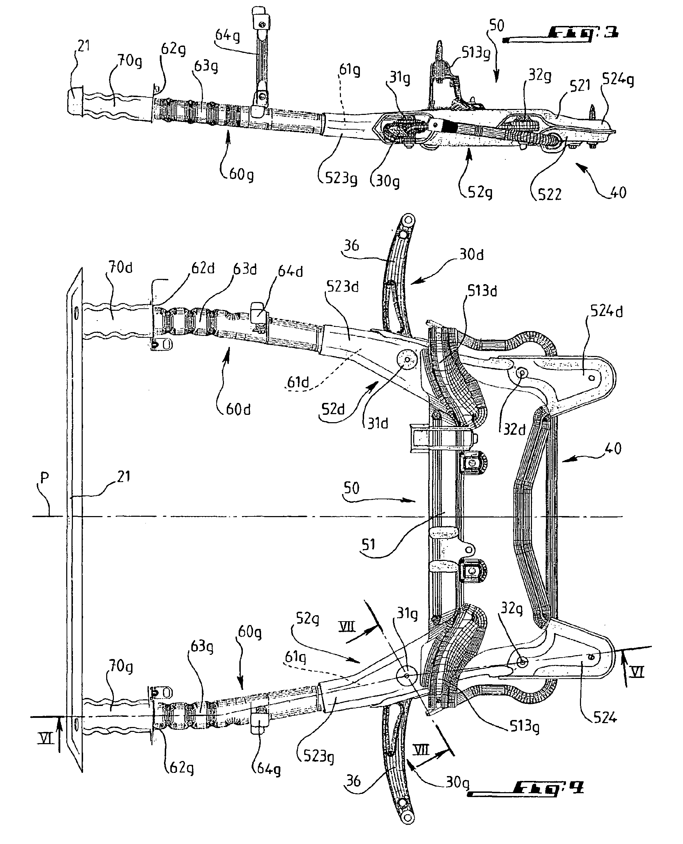

On notera que l'utilisation des moyens d'absorption d'énergie et de guidage de la déformation décrits ci-dessus n'est pas limitée aux prolonges et aux berceaux du type représenté sur les figures 1 à 7. Ils peuvent être utilisés pour des prolonges présentant des formes et des modes de fixation sur les éléments de berceaux très différents. Ils peuvent être utilisés également sur des berceaux présentant des structures transversales de formes différentes.

On comprend donc bien que la conception du berceau permet une excellente stabilité en cas de choc sur la voie basse de la structure, tout en permettant d'absorber une énergie importante.

Ces performances résultent de la conception des prolonges et du mode de liaison de ces prolonges, directement sur les triangles de suspension.

Elles résultent également du fait que ces prolonges sont profondément engagées dans les longerons de berceau, et de la conception des longerons de berceau.

Elles résultent aussi de la présence de moyens d'absorption d'énergie et de guidage de la déformation sur les prolonges.

On peut enfin noter que l'assemblage des différents éléments de la voie basse est particulièrement simple. On dépose dans la coquille centrale inférieure les coquilles inférieures des longerons de berceau, puis on met en place les prolonges et les triangles de suspension, on dépose ensuite les coquilles supérieures des longerons de berceau, puis la coquille centrale supérieure, et on solidarise l'ensemble en plaçant les vis des points de fixation et par soudage.

## Revendications

1. Structure de véhicule automobile, comprenant un brancard (1), un berceau (40), une première traverse transversale (20) et, sur chacun des côtés droit et gauche du véhicule, un triangle de suspension de roue (30d, 30g), le brancard (1) comprenant des longerons (10d, 10g) disposés sur les côtés droit et gauche du véhicule, symétriquement par rapport à un plan longitudinal médian (P) de ce véhicule, les longerons (10d, 10g) comprenant, chacun sur le côté correspondant du véhicule , une poutre médiane droite ou gauche (11d, 11g) s'étendant dans une zone longitudinalement médiane du véhicule, une poutre antérieure droite ou gauche (12d, 12g) s'étendant vers l'avant du véhicule et surélevée par rapport à la poutre médiane (11d, 11g), et une poutre inclinée droite ou gauche (13d, 13g) reliant la poutre médiane (11d, 11g) à la poutre antérieur (12d, 12g) du même côté du véhicule, la première traverse (20) reliant les extrémités antérieures (121d, 121g) des poutres antérieures (12d, 12g), le berceau (40) comprenant une structure transversale (50) reliant entre elles les poutres médianes droite et gauche (11d, 11g), et des prolonges (60d, 60g) encastrées par des parties d'extrémités postérieures (61d, 61g) dans la structure transversale (50) des côtés droit et gauche du véhicule et s'étendant vers l'avant respectivement sous les poutres antérieures droite et gauche (12d, 12g), les triangles de suspension (30d, 30g) étant chacun fixé à la structure transversale (50) par un points de fixation antérieur (31d, 31g) et par un point de fixation postérieur (32d, 32g), une deuxième traverse (21) reliant des extrémités antérieures (62d, 62g) des prolonges droite et gauche (60d, 60g) opposées aux parties d'extrémités postérieures (61d, 61g), le point de fixation antérieur (31d, 31g) solidarise, de chaque côté du véhicule, la partie d'extrémité postérieure (61d, 61g) de la prolonge (60d, 60g) à la structure transversale (50) et au triangle de suspension (30d, 30g), **caractérisée en ce que** les parties d'extrémités postérieures (61d, 61g) des prolonges (60d, 60g) s'élargissent progressivement latéralement jusqu'à leurs extrémités libres postérieures (612).

2. Structure selon la revendication 1, **caractérisé en ce que** la structure transversale (50) comprend une traverse centrale (51) et, sur chacun des côtés droit et gauche de la traverse centrale (51), un longeron de berceau (52d, 52g) creux, formé chacun de coquilles supérieure (521) et inférieure (522).

3. Structure selon la revendication 2, **caractérisée en ce que** chaque longeron de berceau (52d, 52g) comprend une partie antérieure (523d, 523g) dans laquelle est encastrée la partie d'extrémité postérieure (61d, 61g) de la prolonge (60d, 60g) correspondante.

4. Structure selon la revendication 3, **caractérisée en ce que** les prolonges (60d, 60g) sont encastrées dans les longerons de berceau (52d, 52g) sur au moins un quart de leur longueur longitudinale.

5. Structure selon la revendication 3 ou 4, **caractérisée en ce que** les parties extrémités postérieures (61d, 61g) des prolonges gauche et droite (60d, 60g) présentent chacune un logement (611) s'étendant dans un plan transversal, un coude (33) du triangle de suspension (30d, 30g) correspondant au point de fixation antérieur (31d, 31g) étant engagé dans ce logement (611).

6. Structure selon la revendication 5, **caractérisée en ce que** les triangles de suspension droit et gauche (30d, 30g) comprennent chacun une première branche longitudinale (34) s'étendant du coude (33) jusqu'à une extrémité longitudinale libre (35) et située à l'intérieur du longeron de berceau (52d, 52g) correspondant, et une seconde branche transversale (36) prolongeant la première à partir du coude (33) vers l'extérieur du véhicule, le point de fixation postérieur (32d, 32g) solidarisant la première branche longitudinale (34) avec le longeron de berceau (52d, 52g).

7. Structure selon l'une quelconque des revendications 2 à 6, **caractérisée en ce que** la traverse centrale (51) est constituée de coquilles centrales supérieure et inférieure formant un corps au moins partiellement creux, les longerons de berceau droit et gauche (52d, 52g) étant enserrés au moins partiellement entre les coquilles centrales supérieure et inférieure.

8. Structure selon l'une quelconque des revendications 1 à 7, **caractérisée en ce que** les prolonges (60d, 60g) sont des tubes creux monoblocs réalisés par hydroformage.

9. Structure selon l'une quelconque des revendications 1 à 8, **caractérisée en ce que** les prolonges droite et gauche (60d, 60g) comprennent chacune des moyens d'absorption d'énergie par déformation contrôlée de la prolonge en cas de choc.

10. Structure selon la revendication 9, **caractérisée en ce que** les prolonges droite et gauche (60d, 60g) comprennent chacune des moyens pour guider la déformation de la prolonge en cas de choc.

11. Structure selon la revendication 10, **caractérisée en ce que** les prolonges droite et gauche (60d, 60g) s'étendent dans une direction générale proche de la direction longitudinale, la déformation desdites prolonges étant guidée en faisant varier la raideur des sections transversales de ces prolonges en fonction de leur position longitudinale.

12. Structure selon la revendication 11, **caractérisée en ce que** la raideur des sections transversales des prolonges droite et gauche (60d, 60g) est relativement plus faible aux extrémités antérieures (62d, 62g) des prolonges, relativement plus forte aux parties d'extrémité postérieures (61d, 61g) des prolonges, et augmente progressivement d'avant en arrière en fonction de la position longitudinale de la section.

13. Structure selon la revendication 12, **caractérisée en ce que** les prolonges droite et gauche (60d, 60g) présentent des sections transversales sensiblement rectangulaire à angles arrondis, les rayons de courbure des angles arrondis étant relativement plus faibles aux extrémités antérieures (62d, 62g) de la prolonge, relativement plus élevés aux parties d'extrémité postérieures (61d, 61g) des prolonges, et augmentant progressivement d'avant en arrière en fonction de la position longitudinale de la section.

14. Structure selon l'une quelconque des revendications 9 à 13, **caractérisée en ce que** les moyens d'absorption d'énergie de chacune des prolonges droite et gauche (60d, 60g) comprennent au moins une vague (65) formée autour de la prolonge, dans une section transversale de celle-ci.

15. Structure selon l'une quelconque des revendications 9 à 14, **caractérisée en ce que** les moyens d'absorption d'énergie de chacune des prolonges droite et gauche (60d, 60g) comprennent au moins deux vagues (65) formées autour de la prolonge, dans des sections transversales de celle-ci.

16. Structure selon l'une quelconque des revendications 14 ou 15, **caractérisée en ce que** les prolonges droite et gauche (60d, 60g) s'étendent dans une direction générale proche de la direction longitudinale et présentent chacune des sections transversales sensiblement rectangulaires, les vagues (65) comprenant des tronçons supérieur, inférieur et latéraux, les tronçons latéraux étant décalés longitudinalement par rapport aux tronçons supérieur et inférieur.

17. Structure selon l'une quelconque des revendications 9 à 13, **caractérisée en ce que** les moyens d'absorption d'énergie de chacune des prolonges droites et gauche (60d, 60g) comprennent une pluralité de vagues formées autour de la prolonge, juxtaposées, formant une boîte absborbeur de chocs (66).

18. Structure selon l'une quelconque des revendications 9 à 13, **caractérisée en ce que** les prolonges droite et gauche (60d, 60g) s'étendent dans une direction générale proche de la direction longitudinale et présentent chacune deux faces latérales (601) mutuellement opposées, les moyens d'absorption d'énergie de chacune desdites prolonges comprenant au moins une rainure (67) perpendiculaire à ladite direction générale sur chacune des faces latérales (601).

19. Structure selon l'une quelconque des revendications 9 à 13, **caractérisée en ce que** les prolonges droite et gauche (60d, 60g) s'étendent dans une direction générale proche de la direction longitudinale et présentent chacune des sections transversales sensiblement rectangulaires, les moyens d'absorption d'énergie de chacune desdites prolonges comprenant des rainures obliques (68) ménagées à des angles d'au moins une section transversale de la prolonge.

20. Structure selon l'une quelconque des revendications 9 à 19, **caractérisée en ce que** les moyens d'absorption d'énergie des prolonges (60d, 60g) droite et gauche sont disposés sur des parties antérieures (63d, 63g) desdites prolonges.

## Claims

1. Motor vehicle structure comprising a chassis frame (1), a cradle (40), a first transverse crossmember (20) and, on each of the right-hand and left-hand sides of the vehicle, a wheel suspension wishbone (30d, 30g), the chassis frame (1) comprising side rails (10d, 10g) positioned on the right and left sides of the vehicle, symmetrically with respect to a longitudinal mid-plane (P) of this vehicle, the side rails (10d, 10g) comprising, each on the corresponding side of the vehicle, a right or left central beam (11d, 11g) extending in a longitudinally central region of the vehicle, a right or left anterior beam (12d, 12g) extending towards to the front of the vehicle and at a higher level than the central beam (11d, 11g), and a right or left inclined beam (13d, 13g) connecting the central beam (11d, 11g) to the anterior beam (12d, 12g) on the same side of the vehicle, the first crossmember (20) connecting the anterior ends (121d, 121g) of the anterior beams (12d, 12g), the cradle (40) comprising a transverse structure (50) connecting the right and left central beams (11d, 11g) together, and extensions (60d, 60g) which, via posterior end parts (61d, 61g), are built into the transverse structure (50) of the right and left sides of the vehicle and extend forward respectively under the right and left anterior beams (12d, 12g), the suspension wishbones (30d, 30g) each being fixed to the transverse structure (50) by an anterior fixing point (31d, 31g) and via a posterior fixing point (32d, 32g), a second crossmember (21) connecting the anterior ends (62d, 62g) of the right and left extensions (60d, 60g) opposite to the posterior end parts (61d, 61g), the anterior fixing point (31d, 31g) securing, on each side of the vehicle, the posterior end part (61d, 61g) of the extension (60d, 60g) to the transverse structure (50) and to the suspension wishbone (30d, 30g), **characterized in that** the posterior end parts (61d, 61g) of the extensions (60d, 60g) progressively widen laterally as far as their posterior free ends (612).

2. Structure according to Claim 1, **characterized in that** the transverse structure (50) comprises a central crossmember (51) and, on each of the right and left sides of the central crossmember (51), a hollow cradle side rail (52d, 52g) each formed of an upper shell (521) and a lower shell (522).

3. Structure according to Claim 2, **characterized in that** each cradle side rail (52d, 52g) comprises an anterior part (523d, 523g) into which the posterior end part (61d, 61g) of the corresponding extension (60d, 60g) is in-built.

4. Structure according to Claim 3, **characterized in that** the extensions (60d, 60g) are built into the cradle side rails (52d, 52g) over at least one quarter of their longitudinal length.

5. Structure according to Claim 3 or 4, **characterized in that** the posterior end parts (61d, 61g) of the right and left extensions (60d, 60g) each have a housing (611) extending in a transverse plane, an elbow (33) of the suspension wishbone (30d, 30g) which corresponds to the anterior fixing point (31d, 31g) being engaged in this housing (611).

6. Structure according to Claim 5, **characterized in that** the right and left suspension wishbones (30d, 30g) each comprise a longitudinal first branch (34) extending from the elbow (33) as far as a longitudinal free end (35) and situated inside the corresponding cradle side rail (52d, 52g) and a transverse second branch (36) extending the first branch from the elbow (33) towards the outside of the vehicle, the posterior fixing point (32d, 32g) securing the longitudinal first branch (34) to the cradle side rail (52d, 52g).

7. Structure according to any one of Claims 2 to 6, **characterized in that** the central crossmember (51) consists of upper and lower central shells forming an at least partially hollow body, the right and left cradle side rails (52d, 52g) being at least partially gripped between the upper and lower central shells.

8. Structure according to any one of Claims 1 to 7, **characterized in that** the extensions (60d, 60g) are one-piece hollow tubes produced by hydroforming.

9. Structure according to any one of Claims 1 to 8, **characterized in that** the right and left extensions (60d, 60g) each comprise energy absorption means which work by controlled deformation of the extension in the event of an impact.

10. Structure according to Claim 9, **characterized in that** the right and left extensions (60d, 60g) each comprise means for guiding the deformation of the extension in the event of an impact.

11. Structure according to Claim 10, **characterized in that** the right and left extensions (60d, 60g) extend in an overall direction close to the longitudinal direction, the deformation of the said extensions being guided by varying the stiffness of the cross sections of these extensions according to their longitudinal position.

12. Structure according to Claim 11, **characterized in that** the stiffness of the cross sections of the right and left extensions (60d, 60g) is, in relative terms, lower at the anterior ends (62d, 62g) of the extensions, greater at the posterior end parts (61d, 61g) of the extensions, and increases progressively from front to rear according to the longitudinal position of the section.

13. Structure according to Claim 12, **characterized in that** the right and left extensions (60d, 60g) have cross sections that are substantially rectangular with rounded corners, the radii of curvature of the rounded corners being, in relative terms, smaller at the anterior ends (62d, 62g) of the extension, higher at the posterior end parts (61d, 61g) of the extensions, and increasing progressively from front to rear according to the longitudinal position of the section.

14. Structure according to any one of Claims 9 to 13, **characterized in that** the energy absorption means of each of the right and left extensions (60d, 60g) comprise at least one wave form (65) formed around the extension, in a transverse section thereof.

15. Structure according to any one of Claims 9 to 14, **characterized in that** the energy absorption means of each of the right and left extensions (60d, 60g) comprise at least two wave forms (65) formed around the extension, in transverse sections thereof.

16. Structure according to any one of Claims 14 and 15, **characterized in that** the right and left extensions (60d, 60g) extend in an overall direction close to the longitudinal direction and each have cross sections substantially in the shape of rectangles, the wave forms (65) comprising upper, lower and lateral portions, the lateral portions being longitudinally offset relative to the upper and lower portions.

17. Structure according to any one of Claims 9 to 13, **characterized in that** the energy absorption means of each of the right and left extensions (60d, 60g) comprise a plurality of juxtaposed wave forms created around the extension, forming an impact-absorbing box (66).

18. Structure according to any one of Claims 9 to 13, **characterized in that** the right and left extensions (60d, 60g) extend in an overall direction close to the longitudinal direction and each have two mutually opposed lateral faces (601), the energy absorption means of each of said extensions comprising at least one groove (67) perpendicular to the said overall direction along each of the lateral faces (601).

19. Structure according to any one of Claims 9 to 13, **characterized in that** the right and left extensions (60d, 60g) extend in an overall direction close to the longitudinal direction and each has cross sections substantially in the shape of rectangles, the energy absorption means of each of the said extensions comprising oblique grooves (68) formed at corners of at least one cross section of the extension.

20. Structure according to any one of Claims 9 to 19, **characterized in that** the energy absorption means of each of the right and left extensions (60d, 60g) are situated on anterior parts (63d, 63g) of the said extensions.

## Patentansprüche

1. Kraftfahrzeugstruktur, die einen Längsrahmen (1), eine Halterung (40), einen ersten querliegenden Querträger (20), und auf jeder, der rechten und linken, Seite des Fahrzeugs einen Rad-Dreiecksquerlenker (30d, 30g) aufweist, wobei der Längsrahmen (1) Längsträger (10d, 10g) aufweist, die auf der rechten und der linken Seite des Fahrzeugs symmetrisch bezüglich einer Mittellängsebene (P) dieses Fahrzeugs angeordnet sind, wobei die Längsträger (10d, 10g) je auf der entsprechenden Seite des Fahrzeugs einen rechten oder linken Mittelbalken (11d, 11g), der sich in einer in Längsrichtung mittleren Zone des Fahrzeugs erstreckt, einen rechten oder linken vorderen Balken (12d, 12g), der sich zur Vorderseite des Fahrzeugs und bezüglich des Mittelbalkens (11d, 11g) überhöht erstreckt, und einen rechten oder linken geneigten Balken (13d, 13g) aufweist, der den Mittelbalken (11d, 11g) mit dem vorderen Balken (12d, 12g) auf der gleichen Seite des Fahrzeugs verbindet, wobei der erste Querträger (20) die vorderen Enden (121d, 121g) der vorderen Balken (12d, 12g) verbindet, wobei die Halterung (40) eine Querstruktur (50), die den rechten und den linken Mittelbalken (11d, 11g) miteinander verbindet, und Verlängerungen (60d, 60g) aufweist, die über hintere Endbereiche (61d, 61g) in die Querstruktur (50) der rechten und linken Seite des Fahrzeugs eingepasst sind und sich nach vorne unter dem vorderen rechten bzw. linken Balken (12d, 12g) erstrecken, wobei die Dreiecksquerlenker (30d, 30g) je an der Querstruktur (50) über einen vorderen Befestigungspunkt (31d, 31g) und über einen hinteren Befestigungspunkt (32d, 32g) befestigt sind, wobei ein zweiter Querträger (21) vordere Enden (62d, 62g) der rechten und linken Verlängerungen (60d, 60g) entgegengesetzt zu den hinteren Endbereichen {61d, 61g) verbindet, wobei der vordere Befestigungspunkt (31d, 31g) auf jeder Seite des Fahrzeugs den hinteren Endbereich (61d, 61g) der Verlängerung (60d, 60g) fest mit der Querstruktur (50) und mit dem Dreiecksquerlenker (30d, 30g) verbindet, **dadurch gekennzeichnet, dass** die hinteren Endbereiche (61d, 61g) der Verlängerungen (60d, 60g) sich progressiv seitlich bis zu ihren freien hinteren Enden (612) verbreitern.

2. Struktur nach Anspruch 1, **dadurch gekennzeichnet, dass** die Querstruktur (50) einen zentralen Querträger (51) und auf jeder, der rechten und linken, Seite des zentralen Querträgers (51) einen hohlen Halterungslängsträger (52d, 52g) aufweist, die je von einer oberen (521) und einer unteren Schale (522) gebildet werden.

3. Struktur nach Anspruch 2, **dadurch gekennzeichnet, dass** jeder Halterungslängsträger (52d, 52g) einen vorderen Bereich (523d, 523g) aufweist, in den der hintere Endbereich (61d, 61g) der entsprechenden Verlängerung (60d, 60g) eingepasst ist.

4. Struktur nach Anspruch 3, **dadurch gekennzeichnet, dass** die Verlängerungen (60d, 60g) in die Halterungslängsträger (52d, 52g) über mindestens ein Viertel ihrer Länge in Längsrichtung eingepasst sind.

5. Struktur nach Anspruch 3 oder 4, **dadurch gekennzeichnet, dass** die hinteren Endbereiche (61d, 61g) der linken und der rechten Verlängerungen (60d, 60g) je eine Aufnahme (611) aufweisen, die sich in einer Querebene erstreckt, wobei ein Bogen (33) des Dreiecksquerlenkers (30d, 30g), der dem vorderen Befestigungspunkt (31d, 31g) entspricht, in diese Aufnahme (611) eingesetzt ist.

6. Struktur nach Anspruch 5, **dadurch gekennzeichnet, dass** der rechte und der linke Dreiecksquerlenker (30d, 30g) je einen ersten Längsschenkel (34), der sich vom Bogen (33) bis zu einem freien Längsende (35) erstreckt und sich innerhalb des entsprechende Halterungslängsträgers (52d, 52g) befindet, und einen zweiten Querschenkel (36) aufweisen, der den ersten ausgehend vom Bogen (33) nach außerhalb des Fahrzeugs verlängert, wobei der hintere Befestigungspunkt (32d, 32g) den ersten Längsschenkel (34) fest mit dem Halterungslängsträger (52d, 52g) verbindet.

7. Struktur nach einem der Ansprüche 2 bis 6, **dadurch gekennzeichnet, dass** der zentrale Querträger (51) aus zentralen oberen und unteren Schalen besteht, die einen zumindest zum Teil hohlen Körper bilden, wobei der rechte und der linke Halterungslängsträger (52d, 52g) zumindest teilweise zwischen den zentralen oberen und unteren Schalen eingespannt sind.

8. Struktur nach einem der Ansprüche 1 bis 7, **dadurch gekennzeichnet, dass** die Verlängerungen (60d, 60g) einstückige Hohlrohre sind, die durch Hydroforming hergestellt werden.

9. Struktur nach einem der Ansprüche 1 bis 8, **dadurch gekennzeichnet, dass** die rechten und linken Verlängerungen (60d, 60g) je Energieabsorptionsmittel durch kontrollierte Verformung der Verlängerung im Fall eines Aufpralls aufweisen.

10. Struktur nach Anspruch 9, **dadurch gekennzeichnet, dass** die rechten und linken Verlängerungen (60d, 60g) je Mittel aufweisen, um die Verformung der Verlängerung im Fall eines Aufpralls zu führen.

11. Struktur nach Anspruch 10, **dadurch gekennzeichnet, dass** die rechten und linken Verlängerungen (60d, 60g) sich in einer allgemeinen Richtung nahe der Längsrichtung erstrecken, wobei die Verformung der Verlängerungen geführt wird, indem die Steifheit der Querschnitte dieser Verlängerungen in Abhängigkeit von ihrer Längsstellung verändert wird.

12. Struktur nach Anspruch 11, **dadurch gekennzeichnet, dass** die Steifheit der Querschnitte der rechten und linken Verlängerungen (60d, 60g) an den vorderen Enden (62d, 62g) der Verlängerungen relativ schwächer, an den hinteren Endbereichen (61d, 61g) der Verlängerungen relativ stärker ist und in Abhängigkeit von der Längsstellung des Querschnitts progressiv von vorne nach hinten zunimmt.

13. Struktur nach Anspruch 12, **dadurch gekennzeichnet, dass** die rechten und linken Verlängerungen (60d, 60g) im Wesentlichen rechteckige Querschnitte mit abgerundeten Ecken aufweisen, wobei die Krümmungsradien der abgerundeten Ecken an den vorderen Enden (62d, 62g) der Verlängerung relativ schwächer, an den hinteren Endbereichen (61d, 61g) der Verlängerungen relativ stärker sind und in Abhängigkeit von der Längsstellung des Querschnitts progressiv von vorne nach hinten zunehmen.

14. Struktur nach einem der Ansprüche 9 bis 13, **dadurch gekennzeichnet, dass** die Energieabsorptionsmittel jeder der rechten und der linken Verlängerungen (60d, 60g) mindestens eine Ausbauchung (65) aufweisen, die um die Verlängerung herum in einem ihrer Querschnitte geformt ist.

15. Struktur nach einem der Ansprüche 9 bis 14, **dadurch gekennzeichnet, dass** die Energieabsorptionsmittel jeder der rechten und linken Verlängerungen (60d, 60g) mindestens zwei Ausbauchungen (65) aufweisen, die um die Verlängerung herum in Querschnitten von dieser geformt sind.

16. Struktur nach einem der Ansprüche 14 oder 15, **dadurch gekennzeichnet, dass** die rechten und linken Verlängerungen (60d, 60g) sich in einer allgemeinen Richtung nahe der Längsrichtung erstrecken und je im Wesentlichen rechteckige Querschnitte besitzen, wobei die Ausbauchungen (65} obere, untere und seitliche Abschnitte aufweisen, wobei die seitlichen Abschnitte in Längsrichtung bezüglich der oberen und unteren Abschnitte versetzt sind.

17. Struktur nach einem der Ansprüche 9 bis 13, **dadurch gekennzeichnet, dass** die Energieabsorptionsmittel jeder der rechten und linken Verlängerungen (60d, 60g) mehrere um die Verlängerung herum geformte, nebeneinander liegende Ausbauchungen aufweisen, die ein Stoßdämpfergehäuse (66) bilden.

18. Struktur nach einem der Ansprüche 9 bis 13, **dadurch gekennzeichnet, dass** die rechten und linken Verlängerungen (60d, 60g) sich in einer allgemeinen Richtung nahe der Längsrichtung erstrecken und je zwei einander gegenüberliegende Seitenflächen (601) aufweisen, wobei die Energieabsorptionsmittel jeder der Verlängerungen mindestens eine Rille (67) lotrecht zur allgemeinen Richtung auf jeder der Seitenflächen (601) aufweisen.

19. Struktur nach einem der Ansprüche 9 bis 13, **dadurch gekennzeichnet, dass** die rechten und linken Verlängerungen (60d, 60g) sich in einer allgemeinen Richtung nahe der Längsrichtung erstrecken und je im Wesentlichen rechteckige Querschnitte aufweisen, wobei die Energieabsorptionsmittel jeder der Verlängerungen schräge Rillen (68) aufweisen, die in Ecken mindestens eines Querschnitts der Verlängerung angeordnet sind.

20. Struktur nach einem der Ansprüche 9 bis 19, **dadurch gekennzeichnet, dass** die Energieabsorptionsmittel der rechten und linken Verlängerungen (60d, 60g) auf vorderen Bereichen (63d, 63g) der Verlängerungen angeordnet sind.
